(19) **Europäisches Patentamt European Patent Office Office européen des brevets**

(11) **EP 3 474 458 B1**

(12) **EUROPEAN PATENT SPECIFICATION**

(45) Date of publication and mention of the grant of the patent:
**13.01.2021 Bulletin 2021/02**

(51) Int Cl.:
*H04B 7/06* (2006.01)  *H04B 7/024* (2017.01)
*H04B 7/04* (2017.01)

(21) Application number: **16907345.9**

(22) Date of filing: **01.07.2016**

(86) International application number:
**PCT/JP2016/069621**

(87) International publication number:
**WO 2018/003112 (04.01.2018 Gazette 2018/01)**

(54) **WIRELESS COMMUNICATION SYSTEM**

DRAHTLOSKOMMUNIKATIONSSYSTEM

SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.04.2019 Bulletin 2019/17**

(73) Proprietor: **Mitsubishi Electric Corporation Chiyoda-ku Tokyo 100-8310 (JP)**

(72) Inventors:
• **KURIYAMA, Tasuku**
  **Tokyo 100-8310 (JP)**
• **MARUYAMA, Takashi**
  **Tokyo 100-8310 (JP)**
• **YAMAGUCHI, Satoshi**
  **Tokyo 100-8310 (JP)**
• **OTSUKA, Masataka**
  **Tokyo 100-8310 (JP)**

(74) Representative: **Pfenning, Meinig & Partner mbB Patent- und Rechtsanwälte Theresienhöhe 11a 80339 München (DE)**

(56) References cited:
**EP-A1- 1 469 686**        **WO-A2-2015/059495**
**JP-A- 2000 307 504**      **JP-A- 2001 298 389**
**US-A1- 2014 341 144**

• **YOHEI MIYATA et al.: "Study on Secure Radio Communication Systems by Using Pre-Equalization Method", Proceedings of the 2007 IEICE General Conference Kiso·Kyokai, 7 March 2007 (2007-03-07), page 173, XP009511461,**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to wireless communication systems that improve confidentiality in mobile communications between a transmitting station and a moving receiving station.

BACKGROUND ART

In a wireless communication system such as a mobile communication system, a directional antenna is mounted in order to maintain the communication quality even though the communication direction changes. For example, in Patent Literature 1, a wireless communication system in which a phased multi-antenna is included in a transmitting station, and the amplitude and the phase of each element signal is controlled to change the direction of a directional beam in accordance with the moving path of a receiving station, is shown. In the transmitting station of this wireless communication system, weight coefficients suitable for communications with the moving object are calculated and prepared in advance for each movement position of the moving object, and, every time when the moving object moves to each movement position, the weight coefficients prepared in advance are changed to cause the direction of the directional beam to follow the moving object.

Patent Literature 2 describes a feedback control method in closed-loop transmit diversity in which feedback information representing amounts of amplitude and phase control is transmitted from a mobile station to a radio base station. The mobile station receives downlink pilot signals, which are transmitted by a handover-destination base station, during handover control, calculates feedback information, which represents amounts of amplitude and phase and phase control transmitted to the handover-destination base station, beforehand based upon the pilot signals received, and transmits the feedback information to the handover-destination base station before completion of base-station changeover by handover.

CITATION LIST

PATENT LITERATURE

Patent Literature 1: Japanese Unexamined Patent Application Publication No. 2001-298389
Patent Literature 2: EP 1 469 686 A1

SUMMARY OF INVENTION

TECHNICAL PROBLEM

However, a problem with a conventional wireless communication system as described in above-mentioned Patent Literature 1 is that because a desired signal is transmitted in the direction of a main beam of the directional beam, a receiving station which is not the communication partner can receive and demodulate the desired signal if the receiving station exists in the direction, even though its position differs. A further problem is that even though the signal power in a direction of a sidelobe is less than that in a direction of the main beam, as the desired signal is transmitted in the direction of the sidelobe, even a receiving station in a direction other than that of the main beam can demodulate the desired signal, and the confidentiality of the communication content is low.

The present invention is made in order to solve the above-mentioned problems, and it is therefore an object of the present invention to provide a wireless communication system that improves confidentiality in mobile communications.

SOLUTION TO PROBLEM

The above problems are solved by the subject-matter according to the independent claim. According to the present invention, there is provided a wireless communication system including: multiple transmitting stations; a receiving station; a modulator to generate a communication symbol sequence from a transmission bit sequence; an amplitude phase calculator to calculate channel state information about a propagation path between each of the transmitting stations and the receiving station which is a moving object that receives signals of the transmitting stations at each communication point of the receiving station at each communication time, wherein the communication points and the communication times are set up in advance, wherein information about the communication points and the communication times are held in the transmitting stations and the receiving station, and wherein the receiving station is configured to pass each set-up communication point at the corresponding set-up communication time, and to calculate amounts of amplitude phase adjustment to the communication symbol sequence on a basis of the channel state information, wherein the amplitude phase calculator is configured to calculate the amounts of amplitude phase adjustment by calculating an inverse matrix of a channel matrix showing the channel state information; an amplitude phase adjustor to adjust an amplitude and a phase of the communication symbol sequence by using the amounts of amplitude phase adjustment, to generate a transmission symbol sequence, wherein the amplitude phase adjustor is configured to multiply the inverse matrix of the channel matrix with a communication symbol vector representing the communication symbol sequence to generate the transmission symbol sequence; a transmission RF unit to convert the transmission symbol sequence into signals in a radio frequency band; and a transmitting antenna disposed in each of the transmitting stations, to radiate a signal of a transmission RF unit, wherein the receiving station comprises: a timing controller to generate a timing for signal reception from each of the transmitting stations, the timing being based on a communication time; a reception RF unit to convert a received signal from each of the transmitting stations into a signal in a baseband, and to extract only a signal at the timing from the signal on which the frequency conversion is performed, to calculate a reception symbol sequence; and a demodulator to demodulate the reception symbol sequence, and receive one communication symbol at each communication point.

## ADVANTAGEOUS EFFECTS OF INVENTION

The wireless communication system according to the present invention shares communication times and communication points between the transmitting and receiving stations, and, in the transmitting stations, the communication symbols are transmitted after the amplitudes and the phases of the communication symbols are adjusted by using the channel state information based on the communication times and the communication points. As a result, communications can be implemented only between the transmitting and receiving stations that share the communication times and the communication points, and the confidentiality can be improved.

## BRIEF DESCRIPTION OF DRAWINGS

Figs. 1A and 1B are explanatory drawings showing a relation between transmitting stations and a receiving station in a wireless communication system of Embodiment 1 of the present invention;
Fig. 2 is a block diagram showing the wireless communication system of Embodiment 1 of the present invention;
Fig. 3 is a block diagram of an amplitude phase calculating unit of the wireless communication system of Embodiment 1 of the present invention;
Fig. 4 is a hardware block diagram of the amplitude phase calculating unit of the wireless communication system of Embodiment 1 of the present invention;
Fig. 5 is a flow chart showing the operation of a transmitting side of the wireless communication system of Embodiment 1 of the present invention;
Fig. 6 is a flow chart showing the operation of a receiving side of the wireless communication system of Embodiment 1 of the present invention;
Fig. 7 is an explanatory drawing of the operation of the wireless communication system of Embodiment 1 of the present invention;
Fig. 8 is a block diagram of a transmitting side in a wireless communication system of Embodiment 2 of the present invention; and
Fig. 9 is a block diagram of an amplitude phase calculating unit in the wireless communication system of Embodiment 2 of the present invention.

## DESCRIPTION OF EMBODIMENTS

Hereafter, in order to explain this invention in greater detail, the preferred embodiments of the present invention will be described with reference to the accompanying drawings. Embodiment 1.

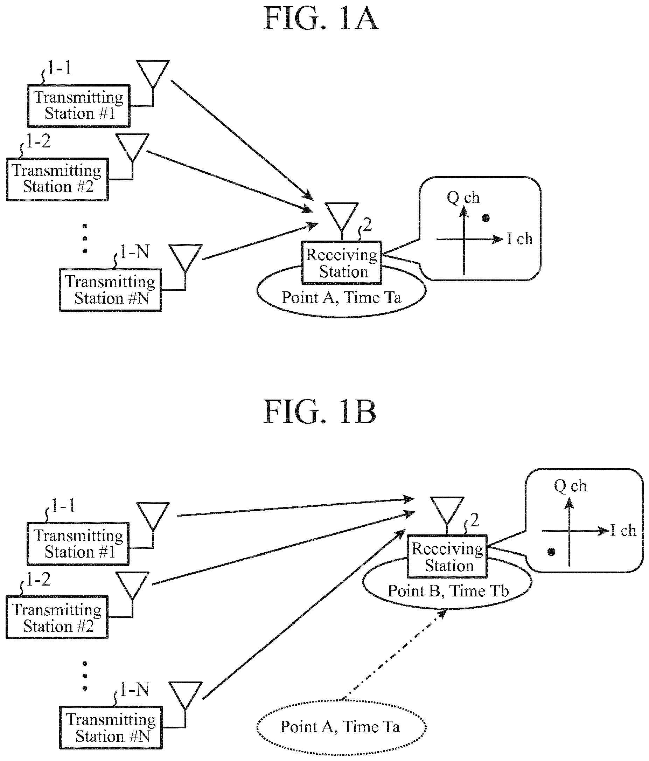

Fig. 1 is an explanatory drawing showing a relation between transmitting stations and a receiving station of a wireless communication system according to this embodiment.
In this embodiment, an example in which signals are transmitted to a moving receiving station 2 from N transmitting stations 1-1 to 1-N (N is an integer equal to or larger than 2) each including a single antenna, and communication symbols on which Quadrature Phase Shift Keying (QPSK) modulation is performed and which are communication objects are communicated at two points, will be explained.

In the wireless communication system of this embodiment, communication points and communication times are set up in advance, and information about the communication points and the communication times are held in the transmitting stations 1-1 to 1-N and the receiving station 2. Each of the transmitting stations 1-1 to 1-N transmits a communication symbol which is processed on the basis of the information about a communication point and a communication time and which is a communication object, and the receiving station 2 passes each set-up communication point at the corresponding set-up communication time, receives signals, and acquires a communication symbol.

Fig. 1A shows a state in which the receiving station 2 receives signals at a point A at a time Ta, and, for example, a communication symbol in a 45-degree phase state in QPSK is received. Fig. 1B shows a state in which the receiving station 2 moves from the point A to a point B, and receives signals at a time Tb, and a communication symbol in a -135-degree phase state in QPSK is received.

In this way, one communication symbol is received at one communication point, and communications are established only between the transmitting and receiving stations that share the information about the communication points and the communication times in advance.

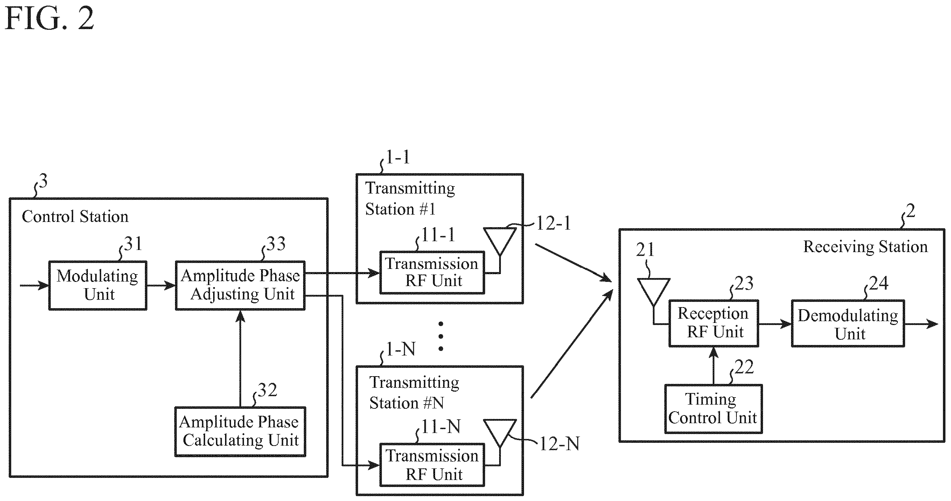

Fig. 2 is a block diagram of the wireless communication system.

The wireless communication system illustrated includes the transmitting stations 1-1 to 1-N, the receiving station 2, and a control station 3. The control station 3 includes a modulating unit 31, an amplitude phase calculating unit 32, and an amplitude phase adjusting unit 33. The modulating unit 31 is comprised of, for example, a semiconductor integrated circuit equipped with a Central Processing Unit (CPU), or a one chip microcomputer, and performs a process of generating a communication symbol which is a signal of a communication object by performing, for example, a baseband modulation process such as QPSK on a transmission bit sequence provided from the outside. Although the example in which the modulation method used for the transmission bit sequence is QPSK, is shown here, the modulation method is not limited to QPSK, and, for example, a modulation method such as Binary Phase Shift Keying (BPSK), 16QAM (Quadrature Amplitude Modulation), or 64QAM can be used.

The amplitude phase calculating unit 32 is comprised of, for example, a semiconductor integrated circuit equipped with a CPU, or a one chip microcomputer, and performs a process of calculating the amounts of adjustment to the amplitude and the phase of a communication symbol on the basis of the information about the positions of the transmitting stations 1-1 to 1-N, and the information about a communication point and a communication time.

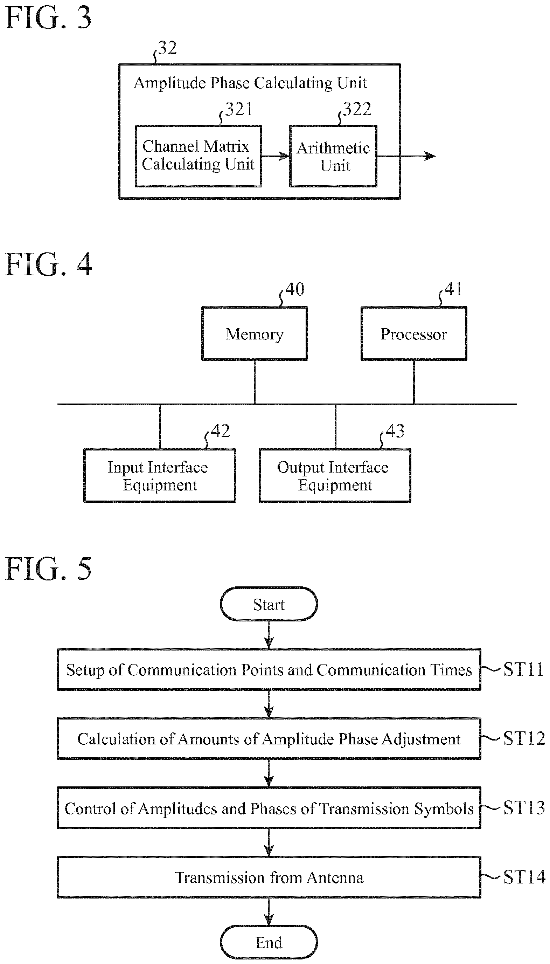

Fig. 3 is a block diagram of the amplitude phase calculating unit 32.

The amplitude phase calculating unit 32 includes a channel matrix calculating unit 321 and an arithmetic unit 322, as shown in the figure. The channel matrix calculating unit 321 is comprised of, for example, a semiconductor integrated circuit equipped with a CPU, or a one chip microcomputer, and performs a process of calculating a channel matrix by using both propagation phase information based on a positional relation between the transmitting stations 1-1 and 1-N and each of the communication points, and the time of passage at each of the communication points, the time of passage being calculated from the moving speed and the moving path of the receiving station 2. The arithmetic unit 322 is comprised of, for example, a semiconductor integrated circuit equipped with a CPU, or a one chip microcomputer, and performs a process of calculating the inverse matrix of the channel matrix calculated by the channel matrix calculating unit 321.

Although it is assumed in the example of Fig. 3, that each of the following units: the channel matrix calculating unit 321 and the arithmetic unit 322 which are the components of the amplitude phase calculating unit 32, is comprised of hardware for exclusive use, the amplitude phase calculating unit 32 can be comprised of a computer.

Fig. 4 is a hardware block diagram in the case in which the amplitude phase calculating unit 32 is comprised of a computer.

In the case in which the amplitude phase calculating unit 32 is comprised of a computer, a program in which the details of processing by the channel matrix calculating unit 321 and the arithmetic unit 322 are described, can be stored in a memory 40 of the computer, and a processor 41 of the computer can execute the program stored in the memory 40.

In Fig. 4, input interface equipment 42 includes, for example, a signal input/output port such as a Universal Serial Bus (USB) port or a serial port, is connected to the channel matrix calculating unit 321, and receives the positions of the N transmitting stations, and the moving path and the moving speed of the receiving station.

Output interface equipment 43 includes, for example, a signal input/output port such as a USB port or a serial port, is connected to the amplitude phase adjusting unit 33, and outputs the amounts of adjustment to the amplitude and the phase of each communication symbol outputted from the arithmetic unit 322 to the amplitude phase adjusting unit 33.

Returning to Fig. 2, the amplitude phase adjusting unit 33 is comprised of, for example, a semiconductor integrated circuit equipped with a CPU, or a one chip microcomputer, and performs a process of adjusting the amplitude and the phase of a communication symbol.

The transmitting stations 1-1 to 1-N include transmission RF units 11-1 to 11-N and single antennas 12-1 to 12-N, respectively. Each of the transmissions RF unit 11-1 to 11-N includes, for example, a mixer and a high power amplifier, and performs a process of converting a signal in a baseband into a signal in a radio frequency band and amplifying a transmission symbol. Each of the single antennas 12-1 to 12-N performs a process of radiating into space a transmission symbol after conversion into the radio frequency band.

The receiving station 2 includes a receiving antenna 21, a timing control unit 22, a reception RF unit 23, and a demodulating unit 24.

The receiving antenna 21 performs a process of receiving a signal in the radio frequency band. The timing control unit 22 is comprised of, for example, a semiconductor integrated circuit equipped with a CPU, or a one chip microcomputer, and performs a process of controlling a receiving timing on the basis of a communication time shared in advance between the transmitting and receiving stations. The reception RF unit 23 includes a low noise amplifier, a mixer, a filter, and an analog-to-digital converter, and performs a process of converting the received signal in the radio frequency band from the receiving antenna 21 into a signal in the baseband at the time shown by the timing control unit 22, to generate a reception symbol. The demodulating unit 24 is comprised of, for example, a semiconductor integrated circuit equipped with a CPU, or a one chip microcomputer, and performs a process of performing a baseband demodulating process on the reception symbol, to calculate a reception bit sequence.

Next, the operation of the wireless communication system of Embodiment 1 will be explained.

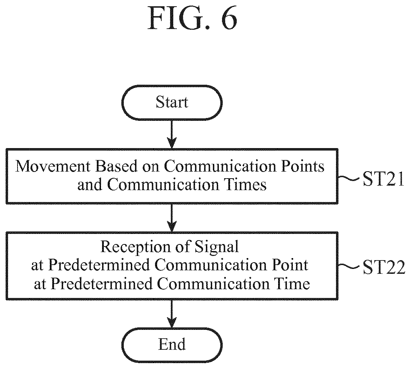

Fig. 5 is a flow chart showing the operation of the transmitting side, and Fig. 6 is a flow chart showing the operation of the receiving side.

A case in which the number of transmitting stations is N, the number of communication points is N, and confidential wireless communications in line-of-sight communications are performed, will be considered.

First, in the control station 3, communication points and communication times are set up (step ST11), and information about these communication points and communication times are registered in the amplitude phase calculating unit 32.

The modulating unit 31 performs, for example, a baseband modulating process such as QPSK on a transmission bit sequence inputted thereto, to generate N communication symbols $S_n$ ($1 \leq n \leq N$) which are signals of communication objects, and outputs the communication symbols to the amplitude phase adjusting unit 33.

When the symbols are expressed as a vector, the communication symbol vector S is $[S_1, S_2, ..., S_N]^T$ and is an N×1 matrix. The superscript T denotes transposition.

Here, n denotes a symbol number, and, when the modulation method is QPSK, each communication symbol $S_n$ is $\exp(jn/4)$, $\exp(j3n/4)$, $\exp(-j3\pi/4)$, or $\exp(-jn/4)$.

The amplitude phase calculating unit 32 calculates a channel matrix by using both the propagation phase information based on the time of passage at each of the communication points and a positional relation between the transmitting stations 1-1 and 1-N and each of the communication points, the time of passage being calculated from the moving speed and the moving path of the receiving station 2. First, in the channel matrix calculating unit 321, the following process is performed.

The distance $d_{mn}$ between the n-th transmitting station and the m-th ($1 \leq m \leq N$) communication point is given by the following equation, by using the position ($x_n$, $y_n$, $z_n$) of the n-th transmitting station and the position ($X_m$, $Y_m$, $Z_m$) of the m-th communication point.

$$d_{mn} = \sqrt{(X_m - x_n)^2 - (Y_m - y_n)^2 + (Z_m - z_n)^2} \qquad (1)$$

Next, when the speed of light is $v_c$ and the angular frequency is $\omega$, information $h_{mn}(t)$ about a propagation path along which a signal transmitted from the n-th transmitting station at a time t reaches the m-th communication point is given by the following equation.

$$h_{mn}(t) = \exp(j\omega(t - d_{mn}/v_c)) \qquad (2)$$

On the other hand, when the distance of movement from the position at the time t=0 that transmission from the transmitting stations 1-1 to 1-N is started to the m-th communication point is $D_m$, the time $t_m$ that the receiving station reaches each communication point, i.e., the communication time $t_m$ is given by the following equation by using the moving speed $v_r$ of the receiving station 2.

$$t_m = D_m / v_r \qquad (3)$$

From the equations (2) and (3), the information $h_{mn}(t)$ about the propagation path from the n-th transmitting station to the m-th communication point at the communication time $t_m$ is given by the following equation.

$$h_{mn}(t_m)=\exp(j\omega(D_m/v_r-d_{mn}/v_c)) \qquad (4)$$

When the equation (4) is expressed by using a matrix, the channel matrix H is given by the following equation.

$$H = \begin{bmatrix} \exp\left\{j\omega\left(\frac{D_1}{v_r}-\frac{d_{11}}{v_c}\right)\right\} & \cdots & \exp\left\{j\omega\left(\frac{D_1}{v_r}-\frac{d_{1N}}{v_c}\right)\right\} \\ \vdots & \ddots & \vdots \\ \exp\left\{j\omega\left(\frac{D_N}{v_r}-\frac{d_{N1}}{v_c}\right)\right\} & \cdots & \exp\left\{j\omega\left(\frac{D_N}{v_r}-\frac{d_{NN}}{v_c}\right)\right\} \end{bmatrix} \qquad (5)$$

The arithmetic unit 322 performs a process such as calculating an inverse matrix on the equation (5) to calculate the amounts of amplitude phase adjustment (step ST12). Here, taking a case of performing an inverse matrix arithmetic operation as an example, an inverse matrix $H^{-1}$ is calculated from H. The arithmetic unit 322 can perform a process based on a Minimum Mean Square Error (MMSE) criterion in consideration of the noise power of the receiving station 2.

The amplitude phase adjusting unit 33 multiplies the inverse matrix $H^{-1}$ from the amplitude phase calculating unit 32 and the communication symbol vector S, to acquire a communication symbol vector A after amplitude phase adjustment (step ST13).

$$A=H^{-1} \cdot S \qquad (6)$$

In this equation, the communication symbol vector A after amplitude phase adjustment is $[A_1, A_2, ..., A_N]^T$ and is an $N \times 1$ matrix. Each element $A_n$ of the communication symbol vector A after amplitude phase adjustment is transmitted from the single antenna 12-n (step ST14).

Next, the receiving station 2 passes the m-th communication point at the communication time $t_m$ on the basis of the information about the communication points and the communication times which are shared in advance (step ST21), and receives a signal by using the receiving antenna 21 (step ST22). Frequency conversion of the received signal is performed by the reception RF unit 23. When the received signal on which the frequency conversion is performed is r(t), in the receiving station, the received signal is $r(t_m)$ because the received signal at the communication time $t=t_m$ provided from the timing control unit 22 is used. Here, when a received signal vector in which the received signal r $(t_m)$ is each element thereof is expressed as R, the received symbols R are calculated by using the following equation.

$$R=H \cdot A+Z$$
$$=H \cdot (H^{-1} \cdot S)+Z$$
$$=S+Z \qquad (7)$$

In this equation, Z is a receiver noise. R is an $N \times 1$ matrix. Because symbols are transmitted by performing a multiplication of the inverse matrix of the channel matrix H, the symbols received are the communication symbol vector S itself if the noise is neglected.

Finally, a reception bit sequence is acquired by performing baseband demodulation on the communication symbol vector S by using the demodulating unit 24.

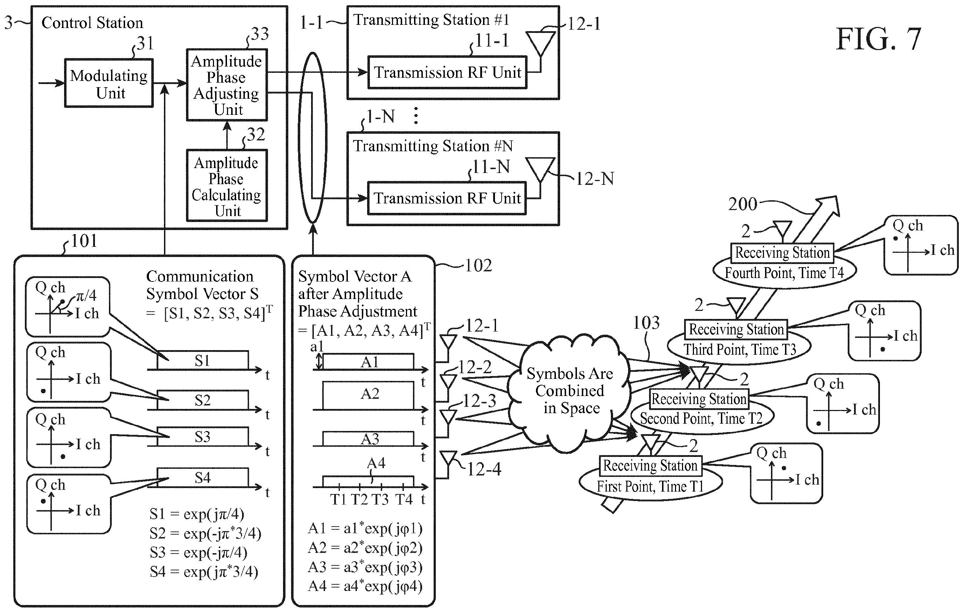

Fig. 7 is an explanatory drawing of the previously-explained operation of the wireless communication system. Hereafter, a case in which the number of transmission symbols is four, the number of transmitting antennas is four, and the number of communication points is four, will be shown, like in the above-mentioned explanation.

In the figure, a signal 101 is the communication symbol vector S $(=[S1, S2, S3, S4]^T)$ outputted from the modulating unit 31. Each of S1 to S4 denotes one symbol after modulation. A signal 102 is the output from the control station 3, and shows the symbol vector A after amplitude phase adjustment. More specifically, the vector in which the amplitudes and the phases of the elements of the communication symbol vector S are adjusted is A $(A=[A1, A2, A3, A4]^T)$. In the example illustrated, the amplitudes after adjustment are a1, a2, a3, and a4, and the phases after adjustment are $\phi1, \phi2, \phi3$, and $\phi4$. The vector A after amplitude phase adjustment is continuously transmitted until the receiving station passes a predetermined communication point. The signals transmitted from the antennas 12-1 to 12-4 are the elements of the vector A after amplitude phase adjustment, and these signals are radiated from the antennas into space and a signal in which A1 to A4 are combined, is received at each communication point (refer to an arrow 103). For example, when reception is performed at a first point at a time T1, received signals A1, A2, A3, and A4 are combined and S1 is acquired. Further, the same goes for second through fourth points on the moving path 200 of the receiving station 2, and, when reception is performed at times T2 to T4, S2 to S4 are acquired.

As mentioned above, according to Embodiment 1, because the communication times and the communication points are shared between the transmitting and receiving stations, and, in the transmitting stations 1-1 to 1-N, the communication symbols are transmitted after the amplitudes and the phases of the communication symbols are adjusted by using the channel matrix based on the communication times and the communication points, communications can be implemented only between the transmitting and receiving stations that share the communication times and the communication points, and the confidentiality can be improved.

Further, even if the communication symbols can be received in an environment in the vicinity of the transmitting stations 1-1 to 1-N in which the reception power is large, because the communication symbols are transmitted after their amplitudes and phases are adjusted, it is difficult to intercept the communication content and the confidentiality can be improved.

In addition, because the processing is centralized at the transmitting stations 1-1 to 1-N, the receiving device of the receiving station 2 which is the moving object can be reduced in size.

As previously explained, because the wireless communication system of Embodiment 1 includes: the modulating unit that generates a communication symbol sequence from a transmission bit sequence; the amplitude phase calculating unit that calculates information about a propagation path between each of the transmitting stations and the receiving station which is a moving object that receives signals of the multiple transmitting stations at each communication point of the receiving station at each communication time, and that calculates the amounts of amplitude phase adjustment to the communication symbol sequence on the basis of the channel state information; the amplitude phase adjusting unit that adjusts the amplitude and the phase of the communication symbol sequence by using the amounts of amplitude phase adjustment, to generate a transmission symbol sequence; the transmission RF units that convert the transmission symbol sequence into signals in a radio frequency band; and a transmitting antenna that is disposed in each of the transmitting stations, and that radiates the signal of the corresponding transmission RF unit, and the receiving station includes: the timing control unit that generates a timing for signal reception from each of the transmitting stations, the timing being based on a communication time; the reception RF unit that converts a received signal from each of the transmitting stations into a signal in a baseband, and extracts only a signal at the timing from the signal on which the frequency conversion is performed, to calculate a reception symbol sequence; and the demodulating unit that demodulates the reception symbol sequence, and the receiving station receives one communication symbol at each communication point, mobile communications whose confidentiality is improved can be performed.

Further, because in the wireless communication system of Embodiment 1, the amplitude phase calculating unit calculates the amounts of amplitude phase adjustment by calculating the inverse matrix of a channel matrix showing the channel state information, the processing load on the receiving station can be reduced.

Embodiment 2.

Although in above-mentioned Embodiment 1 the example in which each of the multiple transmitting stations includes a single antenna, is shown, transmission from multiple transmitting stations each including a multi-antenna can be performed, and this example will be explained below as Embodiment 2.

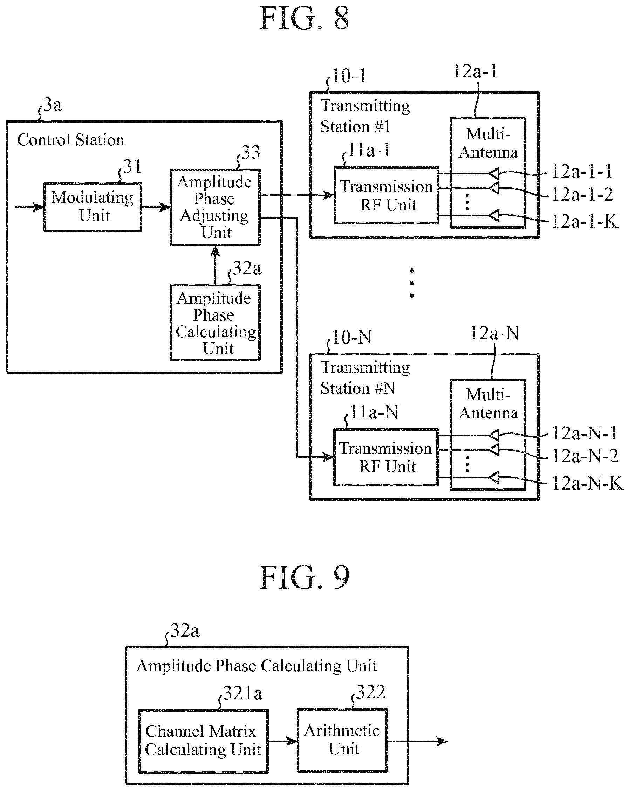

Fig. 8 is a block diagram of a transmitting side in a wireless communication system according to Embodiment 2. In Fig. 8, N transmitting stations 10-1 to 10-N include multi-antennas 12a-1 to 12a-N each having elements whose number is K (K is an integer equal to or larger than 2), respectively, and radiate electric waves from the element antennas 12a-1-1 to 12a-N-K thereof. Further, an amplitude phase calculating unit 32a of a control station 3a is comprised of, for example, a semiconductor integrated circuit equipped with a CPU, or a one chip microcomputer, and performs a process of calculating the amounts of adjustment to the amplitudes and the phases of communication symbols on the basis of information about the positions of the element antennas 12a-1-1 to 12a-N-K, communication points and communication times.

Fig. 9 is a block diagram of the amplitude phase calculating unit 32a, and the amplitude phase calculating unit includes a channel matrix calculating unit 321a and an arithmetic unit 322, as shown in the figure. The channel matrix calculating unit 321a is comprised of, for example, a semiconductor integrated circuit equipped with a CPU, or a one chip microcomputer, and performs a process of calculating a channel matrix by using the positions of the element antennas 12a-1-1 to 12a-N-K, propagation phase information based on the position of each of the communication points, and movement information based on the time of passage at each of the communication points, the time of passage being calculated from the moving speed and the moving path of a receiving station 2.

Because the other components in Figs. 8 and 9 are the same as those of Embodiment 1 shown in Figs. 2 and 3, the corresponding components are designated by the same reference numerals, and an explanation of the components will be omitted hereafter.

Next, the operation of the wireless communication system of Embodiment 2 will be explained.

A case in which the number of transmitting stations is N, the number of element antennas in each of the transmitting stations is K, the number of communication points is M, and confidential wireless communications in line-of-sight communications are performed, will be considered.

A modulating unit 31 generates $N \times K$ communication symbols . The $N \times K$ communication symbols are expressed as a communication symbol vector S.

When the position of the k-th ($1 \leq k \leq K$) element antenna in the n-th ($1 \leq n \leq N$) transmitting station is ($x_{n,k}$, $y_{n,k}$, $z_{n,k}$) and the position of the m-th ($1 \leq m \leq M$) communication point is ($X_m$, $Y_m$, $Z_m$), the distance $d_{mnk}$ from each of the element antennas to each of the communication points is given by the following equation.

$$d_{mnk} = \sqrt{\left(X_m - x_{n,k}\right)^2 - \left(Y_m - y_{n,k}\right)^2 + \left(Z_m - z_{n,k}\right)^2} \qquad (8)$$

Next, when the speed of light is $v_c$, the angular frequency is $\omega$, and a time is t, information $h_{mnk}(t)$ about a propagation path along which a signal transmitted from the k-th element antenna of the n-th transmitting station reaches the m-th communication point, is given by the following equation.

$$h_{mnk}(t) = \exp(j\omega(t - d_{mnk}/v_c)) \qquad (9)$$

From the equations (9) and (3), the information $h_{mnk}(t)$ about the propagation path from the k-th element antenna of the n-th transmitting station to the m-th communication point at a communication time $t_m$, is given by the following equation.

$$h_{mn}(t_m) = \exp(j\omega(D_m/v_r - d_{mnk}/v_c)) \qquad (10)$$

When the equation (10) is expressed by using a matrix, the channel matrix H is given by the following equation.

$$H = \begin{bmatrix} \exp\left\{j\omega\left(\frac{D_1}{v_r} - \frac{d_{111}}{v_c}\right)\right\} & \cdots & \exp\left\{j\omega\left(\frac{D_1}{v_r} - \frac{d_{1NK}}{v_c}\right)\right\} \\ \vdots & \ddots & \vdots \\ \exp\left\{j\omega\left(\frac{D_M}{v_r} - \frac{d_{M11}}{v_c}\right)\right\} & \cdots & \exp\left\{j\omega\left(\frac{D_M}{v_r} - \frac{d_{MNK}}{v_c}\right)\right\} \end{bmatrix} \qquad (11)$$

The arithmetic unit 322 calculates the inverse matrix $H^{-1}$ of this channel matrix H, or the like, and an amplitude phase adjusting unit 33 multiplies the communication symbol vector S by $H^{-1}$, adjusts the amplitude and the phase of each of the symbols, and transmits the symbols from the element antennas 12a-1-1 to 12a-N-K.

As previously explained, because the wireless communication system of Embodiment 2 includes: the modulating unit that generates a communication symbol sequence from a transmission bit sequence; the amplitude phase calculating unit that calculates information about a propagation path between each of the element antennas and a receiving station which is a moving object that receives signals from multiple transmitting stations each including a multi-antenna comprised of multiple element antennas at each communication point of the receiving station at each communication time, and that calculates the amounts of amplitude phase adjustment to the communication symbol sequence on the basis of the channel state information; the amplitude phase adjusting unit that adjusts the amplitude and the phase of the communication symbol sequence by using the amounts of amplitude phase adjustment, to generate a transmission symbol sequence; the transmission RF units that convert the transmission symbol sequence into signals in a radio frequency band; and a transmitting antenna disposed in each of the transmitting stations, and comprised of a multi-antenna that radiates the signal of the corresponding transmission RF unit, and the receiving station includes: the timing control unit that generates a timing for signal reception from each of the transmitting stations, the timing being based on a communication time; the reception RF unit that converts a received signal from each of the transmitting stations into a signal in a baseband, and that extracts only a signal at the timing from the signal on which the frequency conversion is performed, to calculate a reception symbol sequence; and the demodulating unit that demodulates the reception symbol sequence, and the receiving station receives one communication symbol at each communication point, the number of communication symbols can be increased and the transmission capacity can be improved by using a small number of transmitting stations while the confidentiality is maintained, in addition to the advantages of Embodiment 1.

While the invention has been described in its preferred embodiments, it is to be understood that an arbitrary combination of two or more of the above-mentioned embodiments can be made, various changes can be made in an arbitrary component according to any one of the above-mentioned embodiments, and an arbitrary component according to any one of the above-mentioned embodiments can be omitted within the scope of the invention.

INDUSTRIAL APPLICABILITY

As mentioned above, the wireless communication system according to the present invention relates to a wireless communication system in which signals from multiple transmitting stations are transmitted, and which includes a receiving station that receives the signals at multiple communication points at predetermined communication times, and is suitable for use in mobile communications in which high confidentiality of communication content is required.

REFERENCE SIGNS LIST

1-1 to 1-N, 10-1 to 10-N transmitting station, 2 receiving station, 3, 3a control station, 11-1 to 11-N, 11a-1 to 11 a-N transmission RF unit, 12-1 to 12-N single antenna, 12a-1 to 12 a-N multi-antenna, 12a-1-1 to 12 a-N-K Element antenna, 21 receiving antenna, 22 timing control unit, 23 reception RF unit, 24 demodulating unit, 31 modulating unit, 32, 32a amplitude phase calculating unit, 33 amplitude phase adjusting unit, 321, 321a channel matrix calculating unit, 322 arithmetic unit, 40 memory, 41 processor, 42 input interface equipment, and 43 output interface equipment.

**Claims**

1. A wireless communication system comprising:

   multiple transmitting stations (1-1,..., 1-N);
   a receiving station (2);
   a modulator (31) to generate a communication symbol sequence from a transmission bit sequence;
   an amplitude phase calculator (32) to calculate channel state information about a propagation path between each of the transmitting stations (1-1,..., 1-N) and the receiving station (2) which is a moving object that receives signals of the transmitting stations (1-1,..., 1-N) at each communication point of the receiving station (2) at each communication time, wherein the communication points and the communication times are set up in advance, wherein information about the communication points and the communication times are held in the transmitting stations (1-1,..., 1-N) and the receiving station (2), and wherein the receiving station (2) is configured to pass each set-up communication point at the corresponding set-up communication time, and to calculate amounts of amplitude phase adjustment to the communication symbol sequence on a basis of the channel state information, wherein the amplitude phase calculator (32) is configured to calculate the amounts of amplitude phase adjustment by calculating an inverse matrix of a channel matrix showing the channel state information;
   an amplitude phase adjustor (33) to adjust an amplitude and a phase of the communication symbol sequence by using the amounts of amplitude phase adjustment, to generate a transmission symbol sequence, wherein the amplitude phase adjustor (33) is configured to multiply the inverse matrix of the channel matrix with a communication symbol vector representing the communication symbol sequence to generate the transmission symbol sequence;
   a transmission RF unit (11-1,..., 11-N) to convert the transmission symbol sequence into signals in a radio frequency band; and
   a transmitting antenna (12-1,..., 12-N) disposed in each of the transmitting stations (1-1,..., 1-N), to radiate a signal of a transmission RF unit (11-1,..., 11-N),
   wherein the receiving station (2) comprises:

      a timing controller (22) to generate a timing for signal reception from each of the transmitting stations (1-1,..., 1-N), the timing being based on a communication time;
      a reception RF unit (23) to convert a received signal from each of the transmitting stations (1-1,..., 1-N) into a signal in a baseband, and to extract only a signal at the timing from the signal on which the frequency conversion is performed, to calculate a reception symbol sequence; and

a demodulator (24) to demodulate the reception symbol sequence, and receive one communication symbol at each communication point.

2. The wireless communication system according to claim 1,
   wherein each of the multiple transmitting stations (1-1,..., 1-N) includes a multi-antenna comprised of multiple element antennas (12-1,..., 12-N);
   wherein the amplitude phase calculator (32a) is configured to calculate the channel state information about a propagation path between each of the element antennas (12-1,..., 12-N) and the receiving station (2); and
   wherein the transmitting antenna (12a-1-1,..., 12a-N-K) is comprised of a multi-antenna for radiating the signal of the transmission RF unit (11a-1,...,11a-N).

**Patentansprüche**

1. Drahtloses Kommunikationssystem, umfassend:

   mehrere Übertragungsstationen (1-1; ..., 1-N);
   eine Empfangsstation (2);
   einen Modulator (31), um eine Kommunikationssymbolsequenz aus einer Übertragungsbitsequenz zu erzeugen;
   einen Amplituden-Phasen-Berechner (32) zum Berechnen von Kanalstatusinformationen über einen Ausbreitungsweg zwischen jeder der Übertragungsstationen (1-1, ..., 1-N) und der Empfangsstation (2), die ein sich bewegendes Objekt ist, das Signale der Übertragungsstationen (1-1, ..., 1-N) an jedem Kommunikationspunkt der Empfangsstation (2) zu jeder Kommunikationszeit empfängt, wobei die Kommunikationspunkte und die Kommunikationszeiten im Vorhinein eingestellt werden, wobei Informationen über die Kommunikationspunkte und die Kommunikationszeiten in den Übertragungsstationen (1-1, ..., 1-N) und der Empfangsstation (2) gehalten werden, und wobei die Empfangsstation (2) eingerichtet ist, jeden eingestellten Kommunikationspunkt zur entsprechenden eingestellten Kommunikationszeit weiterzugeben und Beträge der Amplituden-Phasen-Anpassung an die Kommunikationssymbolsequenz auf Grundlage der Kanalzustandsinformationen zu berechnen, wobei der Amplituden-Phasen-Berechner (32) eingerichtet ist, die Beträge der Amplituden-Phasen-Anpassung durch Berechnen einer inversen Matrix einer Kanalmatrix, die die Kanalzustandsinformationen zeigt, zu berechnen;
   einen Amplituden-Phasen-Anpasser (33) zum Anpassen einer Amplitude und einer Phase der Kommunikationssymbolsequenz unter Verwendung der Beträge der Amplituden-Phasen-Anpassung, um eine Übertragungssymbolsequenz zu erzeugen, wobei der Amplituden-Phasen-Anpasser (33) eingerichtet ist, die inverse Matrix der Kanalmatrix mit einem Kommunikationssymbolvektor zu multiplizieren, der die Kommunikationssymbolsequenz darstellt, um die Übertragungssymbolsequenz zu erzeugen;
   eine HF-Übertragungseinheit (11-1, ..., 11-N), um die Übertragungssymbolsequenz in Signale in einem Hochfrequenzband umzuwandeln; und
   eine Übertragungsantenne (12-1, 12-N), die in jeder der Übertragungsstationen (1-1, ..., 1-N) angeordnet ist, um ein Signal einer HF-Übertragungseinheit (11-1, ..., 11-N) abzustrahlen,
   wobei die Empfangsstation (2) umfasst:

   eine Zeitsteuerungseinheit (22), um eine Zeitsteuerung für einen Signalempfang von jeder der Übertragungsstationen (1-1, ..., 1-N) zu erzeugen, wobei die Zeitsteuerung auf einer Kommunikationszeit basiert;
   eine HF-Empfangseinheit (23), um ein empfangenes Signal von jeder der Übertragungsstationen (1-1, ..., 1-N) in ein Signal in einem Basisband umzuwandeln, und nur ein Signal zur Zeitsteuerung von dem Signal, an dem die Frequenzumwandlung durchgeführt wird, zu extrahieren, um eine Empfangssymbolsequenz zu berechnen; und
   einen Demodulator (24), um die Empfangssymbolsequenz zu demodulieren und ein Kommunikationssymbol an jedem Kommunikationspunkt zu empfangen.

2. Drahtloses Kommunikationssystem nach Anspruch 1,

   wobei jede der mehreren Übertragungsstationen (1-1, ..., 1-N) eine Mehrfachantenne umfasst, die aus Mehrfachelementantennen (12-1, ..., 12-N) besteht;
   wobei der Amplituden-Phasen-Berechner (32a) eingerichtet ist, die Kanalzustandsinformation über einen Ausbreitungsweg zwischen jeder der Elementantennen (12-1, ..., 12-N) und der Empfangsstation (2) zu berechnen; und

wobei die Übertragungsantenne (12a-1-1, ..., 12a-N-K) aus einer Mehrfachantenne zum Abstrahlen des Signals der HF-Übertragungseinheit (11a-1, ... 11a-N) besteht.

**Revendications**

1. Système de communication sans fil comprenant :

de multiples stations de transmission (1-1, ..., 1-N) ;
une station de réception (2) ;
un modulateur (31) destiné à générer une séquence de symboles de communication à partir d'une séquence de bits de transmission ;
un calculateur d'amplitude et de phase (32) destiné à calculer des informations d'état de canal concernant un trajet de propagation entre chacune des stations de transmission (1-1, ..., 1-N) et la station de réception (2) qui correspond à un objet mobile qui reçoit des signaux des stations de transmission (1-1, ..., 1-N) à chaque point de communication de la station de réception (2) à chaque instant de communication, dans lequel les points de communication et les instants de communication sont établis à l'avance, dans lequel des informations concernant les points de communication et les instants de communication sont maintenues dans les stations de transmission (1-1, ..., 1-N)...., 1-N) et la station de réception (2), et dans lequel la station de réception (2) est configurée de manière à faire passer chaque point de communication établi à l'instant de communication établi correspondant, et à calculer des quantités d'ajustement d'amplitude et de phase de la séquence de symboles de communication sur la base des informations d'état de canal, dans lequel le calculateur d'amplitude et de phase (32) est configuré de manière à calculer les quantités d'ajustement d'amplitude et de phase en calculant une matrice inverse d'une matrice de canal montrant les informations d'état de canal ;
un module d'ajustement de phase et d'amplitude (33) destiné à ajuster une amplitude et une phase de la séquence de symboles de communication en utilisant les quantités d'ajustement de phase et d'amplitude, à générer une séquence de symboles de transmission, dans lequel le module d'ajustement de phase et d'amplitude (33) est configuré de manière à multiplier la matrice inverse de la matrice de canal par un vecteur de symboles de communication représentant la séquence de symboles de communication, en vue de générer la séquence de symboles de transmission ;
une unité radiofréquence, RF, de transmission (11-1, ..., 11-N) destinée à convertir la séquence de symboles de transmission en signaux dans une bande de fréquences radio ; et
une antenne de transmission (12-1, ...,12-N) disposée dans chacune des stations de transmission (1-1, ..., 1-N) en vue de rayonner un signal d'une unité RF de transmission (11-1, ..., 11-N) ;
dans lequel la station de réception (2) comprend :

un contrôleur de temporisation (22) destiné à générer une temporisation pour une réception de signaux en provenance de chacune des stations de transmission (1-1, ..., 1-N), la temporisation étant basée sur un instant de communication ;
une unité RF de réception (23) destinée à convertir un signal reçu en provenance de chacune des stations de transmission (1-1, ..., 1-N), en un signal dans une bande de base, et à extraire uniquement un signal lors de la temporisation, du signal sur lequel la conversion de fréquence est mise en œuvre, en vue de calculer une séquence de symboles de réception ; et
un démodulateur (24) destiné à démoduler la séquence de symboles de réception, et à recevoir un symbole de communication à chaque point de communication.

2. Système de communication sans fil selon la revendication 1,
dans lequel chacune des multiples stations de transmission (1-1, ..., 1-N) inclut une multi-antenne composée de multiples antennes à éléments (12-1, ..., 12-N) ;
dans lequel le calculateur d'amplitude et de phase (32a) est configuré de manière à calculer les informations d'état de canal concernant un trajet de propagation entre chacune des antennes à éléments (12-1, ..., 12-N) et la station de réception (2) ; et
dans lequel l'antenne de transmission (12a-1-1, ..., 12a-N-K) est composée d'une multi-antenne pour rayonner le signal de l'unité RF de transmission (11a -1, ..., 11a-N).

# FIG. 1A

# FIG. 1B

# FIG. 2

EP 3 474 458 B1

FIG. 3

32

Amplitude Phase Calculating Unit

321

Channel Matrix Calculating Unit

322

Arithmetic Unit

FIG. 4

40

Memory

41

Processor

42

Input Interface Equipment

43

Output Interface Equipment

FIG. 5

Start

Setup of Communication Points and Communication Times — ST11

Calculation of Amounts of Amplitude Phase Adjustment — ST12

Control of Amplitudes and Phases of Transmission Symbols — ST13

Transmission from Antenna — ST14

End

# FIG. 6

```
        ┌─────────────┐
        │    Start     │
        └──────┬──────┘
               │
               ▼
┌──────────────────────────────────┐
│ Movement Based on Communication Points │ ～ST21
│     and Communication Times        │
└──────────────┬───────────────────┘
               │
               ▼
┌──────────────────────────────────┐
│        Reception of Signal         │
│ at Predetermined Communication Point │ ～ST22
│ at Predetermined Communication Time │
└──────────────┬───────────────────┘
               │
               ▼
        ┌─────────────┐
        │     End      │
        └─────────────┘
```

FIG. 7

EP 3 474 458 B1

# FIG. 8

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001298389 A
- EP 1469686 A1